# EUROPÄISCHE PATENTSCHRIFT

(11) **EP 3 684 610 B1**
(45) Veröffentlichungstag und Bekanntmachung des Hinweises auf die Patenterteilung: **16.04.2025**
(21) Anmeldenummer: 18782321.6
(22) Anmeldetag: 17.09.2018
(51) Int. Cl.: B32B 7/02, B32B 27/08, B32B 27/20, B32B 27/30

(54) **LASERBESCHRIFTBARE FOLIE**
LASER-WRITABLE FILM
FEUILLE INSCRIPTIBLE AU LASER

(30) Priorität: 22.09.2017 DE 102017216789
(43) Veröffentlichungstag der Anmeldung: 29.07.2020
(73) Patentinhaber: TESA SE, 22848 Norderstedt (DE)
(72) Erfinder: MAATZ, Gero, 40597 Düsseldorf (DE); SEIBERT, Matthias, 22453 Hamburg (DE); HOMANN, Vanessa, 22527 Hamburg (DE); SCHUBERT, Anna, 22850 Norderstedt (DE)
(74) Vertreter: tesa SE
(86) Internationale Anmeldenummer: PCT/EP2018/074987
(87) Internationale Veröffentlichungsnummer: WO 2019/057645

(56) Entgegenhaltungen:
- WO-A1-2009/065630
- DE-A1- 10 048 665
- JP-A- 2017 111 344

## Beschreibung

Die vorliegende Erfindung betrifft eine laserbeschriftbare Folie, ausgebildet und angepasst zur Beschriftbarkeit mittels eines Lasers, umfassend eine Kontrastschicht auf Basis einer vorzugsweise extrudierten Polymethacrylatverbindung, eine auf der Kontrastschicht angeordneten Gravierschicht auf Basis einer vorzugsweise extrudierten Polymethacrylatverbindung, wobei die Polymethacrylatverbindungen auf einer Zusammensetzung umfassend 60 bis 98 Gew.-% zumindest eines Polymethacrylates sowie 2 bis 40 Gew.-% eines farbgebenden Pigments basieren und wobei Kontrastschicht und Gravierschicht voneinander verschiedene farbgebende Pigmente aufweisen, sowie aus der Folie hergestellte lasersensitive Etiketten. Die vorliegende Erfindung betrifft ferner ein Verfahren zur Herstellung einer lasersensitiven Folie.

Die Kennzeichnung von Gegenständen gewinnt zunehmend an Bedeutung. So werden zum Beispiel an Maschinen, elektrischen und elektronischen Geräten sowie insbesondere in der Automobilindustrie herkömmliche bedruckte Etiketten durch laserbeschriftbare Etiketten ersetzt. Mit Hilfe laserbeschriftbarer Etiketten werden Informationen und Hinweise wie Reifendruck oder Treibstoffart auf verschiedenen Bauteilen von Kraftfahrzeugen platziert. Neben solchen Hinweisen können laserbeschriftbare Etiketten auch Sicherheitsinformationen wie Fahrgestell- und Fahrzeugidentifikationsnummern enthalten. Entsprechende Etiketten erlauben im Falle eines Diebstahls oder Unfalls einen Rückschluss auf Fahrzeug und Fertigungsstufen bei seiner Herstellung. Aus dem Stand der Technik sind laserbeschriftbare Etiketten bekannt, die schnell beschrieben werden können, einen hohen Kontrast eingeschriebener Zeichen erlauben. DE 81 30 861 U1, DE 100 48 665 A1 und DE 101 42 638 A1 offenbaren mehrschichtige Etiketten, die eine dünne und eine dicke Acrylat basierte Lackschicht enthalten und mittels Laser beschrieben werden können. In den genannten Beispielen wird der laserbeschriftbare Träger über mehrere Schritte hergestellt, in dem mehrere oder zumindest zwei unterschiedlich eingefärbte auf einem Acrylat basierende Schichten aufeinander beschichtet werden. Vor jedem nachfolgenden Beschichtungsschritt wird die zuvor beschichtete Schicht ausgehärtet und dient somit als festes Substrat für die nachfolgende Beschichtung.

Der Einsatz besonderer zusätzlicher Sicherheitsmerkmale wie Hologrammen, bleibender UV-Abdrücke (foot print) auf dem Substrat, auf dem das Etikett verklebt war, und gezielte Materialauswahl der laserbeschriftbaren Etiketten dienen dazu, einerseits eine Nachahmung des Materials zu erschweren und andererseits Manipulationsversuche kenntlich zu machen. Unter Manipulationsversuchen wird in der Regel der Versuch verstanden, das Etikett von seiner ursprünglichen Verklebungsposition abzulösen und durch ein neues Etikett zu ersetzen, oder das entfernte Etikett an neuer Position neu aufzubringen. Maßnahme, um eine solche Manipulation zu unterbinden, ist die Verwendung mechanisch sensibler Trägermaterialien. Als fragile Träger eignen sich hier Papiere, entsprechend oder eingestellte Polystyrole (US 3,623,944 A) Polyvinylchloride, Zellulose-Acetate (DE 34 31 239 A1), Polyester (JP 1229042 A, US 8,530,045 B2). Darüber hinaus ist der Einsatz von Trägern bekannt, die durch eine Perforation oder Anstanzungen gezielt geschwächt sind (US 2,845,728 A, DE 299 13 746 U1, DE 103 41 807 B1).

Vor dem Hintergrund der komplexen Herstellungsweise solcher Sicherheitsetiketten beziehungsweise solcher manipulationssicheren Träger besteht ein Bedarf an schnell und variabel herzustellenden laserbeschreibbaren Trägern zur Herstellung von manipulationssicheren Etiketten.

Der vorliegenden Erfindung liegt insofern die Aufgabe zugrunde, verbesserte laserbeschriftbare kontrastgebende Folienträger bereitzustellen, die sich im Vergleich zum Stand der Technik in einem Produktionsschritt herstellen lassen. Gleichzeitig soll die chemische und UV-Beständigkeit im Vergleich zu Etiketten des Standes der Technik, wenn möglich erhalten bleiben beziehungsweise verbessert werden. Unter chemischer Beständigkeit ist in diesem Sinne zum Beispiel die Beständigkeit gegenüber Kohlenwasserstoffen wie Treibstoffen für Kraftfahrzeuge, Hydraulikflüssigkeiten und Lösungsmitteln zu verstehen, mit denen die Etiketten möglicher Weise in Kontakt kommen könnten.

Aus der JP 2017 111 344 A ist eine laserbeschriftbare Folie bekannt, umfassend eine Kontrastschicht auf Basis einer Polymethacrylatverbindung und eine auf der Kontrastschicht angeordnete Gravierschicht auf Basis einer Polymethacrylatverbindung. Aufgrund der Zusätze unterschiedlicher Pigmente weisen Kontrastschicht und Gravierschicht verschiedene Farben auf. Nicht erwähnt ist der Zusatz von schlagzähmodifiziertem Polymethacrylat in einer der beiden Schichten

Die vorliegende Erfindung löst diese Aufgabe durch eine laserbeschriftbare Folie der eingangsgenannten Art dadurch, dass das zumindest eine Polymethacrylat von zumindest einer der beiden Schichten frei von Schlagzähmodifikatoren ist und die andere der beiden Schichten ein schlagzähmodifiziertes Polymethacrylat enthält.

Dadurch dass in zumindest einer der beiden Schichten - Kontrastschicht und/oder Gravierschicht - das eingesetzte Polymethacrylat frei von Schlagzähmodifikatoren ist, ist die Folie besonders spröde und weist eine Brüchigkeit auf, die gewährleistet, dass die Folie oder ein aus der Folie hergestelltes Etikett nicht zerstörungsfrei von der Oberfläche, auf der es angebracht ist, abgelöst werden kann.

Besonders bevorzugt ist das zumindest eine Polymethacrylat oder wenigstens eines der Polymethacrylate ein Polymethylmethacrylat (PMMA). Diese weisen besonders gute Eigenschaften in Bezug auf die Brüchigkeit auf.

PMMA-Kunststoffe werden in der Regel durch radikalische Polymerisation von Mischungen erhalten, die Methylmethacrylat enthalten. Im Allgemeinen enthalten diese Mischungen mindestens 40 Gew.-%, vorzugsweise mindestens 60 Gew.-% und besonders bevorzugt mindestens 80 Gew.-%, bezogen auf das Gewicht der Monomere, Methylmethacrylat. Comonomere, die mit Methylmethacrylat copolymerisiert werden können wie 1-Alkene, Vinylester oder (substituiertes) Styrol, können ebenfalls zum Einsatz kommen und werden zum Beispiel in EP 1 963 415 A1 beschrieben.

Das mittlere Molekulargewicht Mw (Gewichtsmittel) solcher PMMA-Kunststoffe liegt im Bereich von 80.000 g/mol bis 180.000 g/mol, insbesondere bei 100.000 g/mol bis 180.000 g/mol entsprechen.

Das gewichtsmittlere Molekulargewicht M_{w} wird dabei mittels Gelpermeationschromatographie (GPC) bestimmt. Als Eluent wird THF mit 0,1 Vol.-% Trifluoressigsäure eingesetzt. Die Messung erfolgt bei 25 °C. Als Vorsäule wird PSS-SDV, 5 µ, 10³ Å, ID 8,0 mm x 50 mm verwendet. Zur Auftrennung werden die Säulen PSS-SDV, 5 µ, 10³ Å sowie 10⁵ Å und 10⁶ Å mit jeweils ID 8,0 mm x 300 mm eingesetzt. Die Probenkonzentration beträgt 4 g/l, die Durchflussmenge 1,0 ml pro Minute. Es wird gegen PMMA-Standards gemessen. (µ = µm; 1 Å = 10⁻¹⁰ m).

Die Sprödigkeit einer PMMA-Folie hängt direkt mit dem Gehalt an Comonomer und Schlagzähmodifikator zusammen. Je geringer der Comonomeranteil beziehungsweise der Gehalt an Schlagzähmodifikator, desto spröder die PMMA-Folie. Um einen maximalen Manipulationsschutz zu erhalten, sind PMMA-Polymere mit einem möglichst hohen Methylmethacrylat-Anteil bevorzugt.

Es sind die Kontrastschicht oder die Gravierschicht frei von Schlagzähmodifikatoren. Erfindungsgemäß ist in einer der beiden Schichten mindestens ein Schlagzähmodifikator enthalten. Als Schlagzähmodifikator werden insbesondere vernetzte Poly(meth)acrylate eingesetzt.

Ein schlagzähmodifizierter Poly(meth)acrylat-Kunststoff besteht aus 1 bis 50 Gew.-% an Schlagzähmodifikator bezogen auf die Menge des PMMA-Matrixpolymers. Bevorzugt weisen die in der PMMA-Matrix verteilten Elastomerteilchen einen Kern mit einer weichen Elastomerphase und einer daran gebundenen Hartphase auf. Der schlagzähmodifizierte Poly(meth)acrylat-Kunststoff besteht aus einem Anteil Matrixpolymer und einem in der Matrix verteilten Anteil an Schlägzähmodifikator auf Basis von vernetzten Poly(meth)acrylaten. Möglichkeiten, die Schlägzähigkeit eines Poly(meth)acrylat Kunststoffs zu erhöhen, werden unter anderem in EP 1 963 415 A beschrieben.

Die einzelnen vorzugsweise coextrudierten Kontrast- und Gravierschichten erfindungsgemäßer laserbeschriftbarer Folien basieren auf einer Zusammensetzung umfassend 60 bis 98 Gew.-% eines nicht schlagzäh modifizierten PMMA-Polymers sowie 2 bis 40 Gew.-% eines farbgebenden Pigmentes.

Vorzugsweise umfasst die laserbeschriftbare Folie eine Kontrastschicht auf Basis einer extrudierten Polymethacrylatverbindung sowie eine oberhalb auf der Kontrastschicht angeordneten extrudierten Gravierschicht auf Basis einer extrudierten Polymethacrylatverbindung.

In einer bevorzugten Ausführungsform der vorliegenden Erfindung umfasst die Zusammensetzung der einzelnen Schichten 75 bis 95 Gew.-% PMMA-Polymer und bevorzugt 5 bis 25 Gew.-% des farbgebenden Pigments. Die Menge des farbgebenden Pigmentes innerhalb der Zusammensetzung der bevorzugten Ausführungsformen hängt von der Art des verwendeten Pigmentes ab.

Im Falle von Ruß (carbon black) als farbgebendes Pigment sind beispielsweise 2 bis 7,5 Gew.-%, insbesondere 5 bis 7,5 Gew.-%, bevorzugt, während im Falle von TiO₂ bevorzugt 2 bis 40 Gew.-%, insbesondere 5 bis 20 Gew.-% und ganz besonders bevorzugt 5 bis 10 Gew.-% zum Einsatz kommen.

Bei der Gravierschicht handelt es sich um eine auf der Kontrastschicht angeordnete Schicht, die mit Hilfe eines einzelnen Laserstrahls oder mit Hilfe mehrerer Laserstrahlen beschriftet werden kann. Bei diesem Beschriftungsvorgang wird die Gravierschicht an den Stellen ablatiert (mittels Laserbeschuss abgetragen), auf die ein Laserstrahl mit entsprechender Energie gerichtet wird. Bei ausreichendem Energieeintrag wird die Gravierschicht lokal vollständig entfernt, so dass sie an diesen Stellen lichtdurchlässig ist. Es ist ebenfalls denkbar, dass die Gravierschicht an einigen Stellen lediglich teilweise ablatiert wird, so dass sich an diesen Stellen ein opakes Erscheinungsbild der Gravierschicht ergibt.

Die Kontrastschicht erfindungsgemäßer Folien umfasst wenigstens ein farbgebendes Pigment. Farbgebende Pigmente im Sinne der vorliegenden Erfindung umfassen ohne Einschränkung sämtliche farbgebende Pigmente, die als Farbstoffe und/oder Aufheller in Farben und Lacken und Folien Anwendung finden. Als farbgebende Pigmente kommen insbesondere Monoazo-, Disazo-, verlackte Azopigmente, Azokondensationspigmente, Benzimidazolon-, Naphthol-, Isoindolinon-, Isoindolin-, Phthalocyanin-, Chinacridon-, Anthanthron-, Perylen-, Perinon-, Thioindigo-, Thiazinindigo-, Chinophthalon-, Dioxazin-, Diketopyrrolopyrrol-Pigment, Ruß, Nickeltitanat, Chromtitanat, Eisenoxid, Ultramann, Chromoxid, Bariumsulfat, Zirkoniumdioxid oder Titandioxid in Frage, wobei Ruß (carbon black) und Titandioxid besonders bevorzugt sind.

Konkrete Beispiele farbgebender Pigmente sind das Titandioxid in der Rutilmodifiaktion ("TiO₂", beispielsweise Rutiltypen der Firma Kronos), Farbruße (beispielsweise Printex-Typen der Firma Evonik) oder weitere dem Fachmann bekannte farbgebende Pigmente, wie sie beispielsweise im Lehrbuch der Lacke und Beschichtungen Band 5 (Hans Kittel und Jürgen Spille, Hirzel Verlag (Stuttgart), 2003) in DE 10 2012 207 100 A1 oder in DE101 02 019 A1 genannt sind. Bevorzugt handelt es sich bei den farbgebenden Pigmenten um möglichst witterungsstabile und UV-stabile Pigmente. Besonders bevorzugt für die Kontrastschicht ist Titandioxid in der Rutilmodifikation. Wesentlich für die Erfindung ist nicht die Farbe des Pigmentes beziehungsweise der Kontrastschicht für sich, sondern der sich im Vergleich zur Gravierschicht ergebende Farbunterschied beziehungsweise Kontrast. Das erfindungsgemäß verwendete Pigment dient dabei der Einstellung des Kontrastes, der nach der Beschriftung der Folie, das heißt nach Ablation der Gravierschicht mittels Laser, zwischen der Kontrastschicht und der Gravierschicht erzeugt wird. Neben Pigmenten können auch organische Farbstoffe wie Azo- oder Anthrachinonfarbstoffe zum Einfärben der Kontrast- oder Gravierschicht genommen werden. Entsprechende organische Farbstoffe, die in das Basismaterial aus PMMA zugemischt werden können, werden in DE 101 02 019 A1 und DE 10 2005 002 072 A beschrieben. Neben dem Zumischen von organischen Farbstoffen zum Basismaterial besteht ferner die Möglichkeit, organische Farbstoffe mit polymerisationsfähigen Gruppen zu verwenden. Diese Farbstoffe werden während der Polymerisation des PMMA-Basismaterial zugegeben und können aufgrund ihrer polymerisationsfähigen Gruppen kovalent in die Polymerkette des PMMA-Basismaterials eingebaut werden. Solche polymerisationsfähigen Farbstoffe werden in EP 0 748 853 A2 und WO 2013/079055 A1 beschrieben.

Als zusätzliches Sicherheitsmerkmal können Farbpigmente eingesetzt werden, die im für den Menschen sichtbaren Bereich keine Strahlung absorbieren und somit im Normalfall unsichtbar sind. Erst bei Bestrahlung des Trägers mit einer Strahlungsquelle geeigneter Wellenlänge werden die Farbpigmente angeregt und emittieren Strahlung mit charakteristischer Wellenlänge.

Weiterhin können langnachleuchtende (phosphoreszierende) oder fluoreszierende Pigmente oder Farbstoffe, sogenannte Taggants, zum Einsatz kommen, die nur oder überwiegend durch UV-Strahlung angeregt werden und im für den Menschen sichtbaren Bereich des Spektrums Strahlung emittieren. Solche Systeme werden zum Beispiel in Ullmann's Enzyklopädie der technischen Chemie, 4. Auflage, 1979, Verlag Chemie beschrieben.

Neben UV-aktiven Pigmenten sind auch IR-aktive Leuchtpigmente für den Einsatz als Additiv in den Trägerschichten denkbar. Beispiele solcher Systeme werden unter anderem in WO 2007/071547 A beschrieben.

Neben IR und UV-aktiven Systemen sind prinzipiell auch Leuchtstoffe geeignet, die durch Elektronenstrahlen, Röntgenstrahlung u.ä. angeregt werden können.

Diese exemplarisch aufgeführten Farbstoffe/-pigmente werden in der Folienrezeptur in zumindest einer der Folienschichten in Mengen von 0,01 bis 50 Gew.-%, bevorzugt in 0,1 bis 25 Gew.-% und besonders bevorzugt zwischen 1 und 10 Gew.-% eingearbeitet. Optional kann die erfindungsgemäße PMMA-Folie eine dritte extrudierte Schicht mit einer bevorzugten Dicke von 2 µm bis 100 µm, insbesondere von 5 µm bis 50 µm aufweisen. Diese optionale dritte Schicht befindet sich dabei auf der Gravierschicht. Die dritte Schicht kann dabei aus transparentem PMMA, Polyvinylidenfluorid (PVDF), Polycarbonat (PC) oder einem Blend aus PMMA und PVDF oder PC bestehen, wobei PMMA besonders bevorzugt ist. Solche coextrudierten Systeme werden unter anderem in WO 2008/074525 A oder WO 2006/043672 A beschrieben. In einer besonders bevorzugten Ausführungsform enthält die dritte transparente außenliegende Schicht ein zusätzliches Pigment, welches im nicht sichtbaren Bereich Strahlung absorbiert und somit für das menschliche Auge nicht zu erkennen ist. Erst bei Bestrahlung des Trägers und somit der Pigmente mit einer Strahlungsquelle geeigneter Wellenlänge werden die Farbpigmente angeregt und emittieren Strahlung mit charakteristischer Wellenlänge. Diese emittierte Strahlung kann im sichtbaren oder im nicht sichtbaren Bereich des Spektrums liegen. In beiden Fällen kann die emittierte Strahlung mittels geeignetem Spektrometer ausgelesen und erkannt werden. Die Konzentration des Pigmentes, das Strahlung im nicht sichtbaren Bereich absorbiert, beträgt vorzugsweise höchstens 10 Gew.-%, bevorzugt höchstens 1 Gew.-% und besonders bevorzugt höchstes 0,1 Gew.-%. Solche Systeme und ein Verfahren zum Erkennen solcher Systeme werden unter anderem in WO 2011/098083 A1 beschrieben.

Die Dicke der Gesamtfolie beträgt vorzugsweise von 40 µm bis 200 µm, besonders bevorzugt von 60 µm bis 100 µm.

Die Gravier- und/oder Kontrastschicht der erfindungsgemäßen Folie können neben den vorstehend genannten Zusatzstoffen wie zum Beispiel organischen Farbstoffen oder Pigmenten auch Antiblockmittel, Verarbeitungshilfen oder Stabilisatoren enthalten. Besonders bevorzugt enthält die Gravier- und/oder die Kontrastschicht, insbesondere bevorzugt die transparente dritte Schicht, UV-Stabilisatoren und/oder UV-Absorber. Bevorzugt wird eine Kombination beider Systeme verwendet. Bei den UV-Stabilisatoren handelt es sich dabei in der Regel um sterisch gehinderten Amine (Hindered Amine Light Stabilizer; HALS-Verbindungen). Bei den UV-Absorbern kann es sich um die bekannten Systeme auf Basis von Benzophenonen, Salicylsäureestern, Zimtsäureestern, Oxalaniliden, Benzoxazinonen, Hydroxyphenylbenztriazolen, Triazinen, Benztriazolen oder Benzyliden-Malonaten handeln. Bevorzugt werden UV-Absorber auf Basis von Triazine und/oder Benztriazole eingesetzt. Im Idealfall wird eine Kombination aus Triazinen und Benztriazolen eingesetzt. Neben dem Einmischen der der UV-Absorber können diese auch mittels einer polymerisationsaktiven Gruppe in das Matrixmaterial einpolymerisiert werden. Das kovalente Einbinden der Absorber hat den Vorteil, dass die niedermolekularen Verbindungen nicht mehr in der Lage sind zu migrieren. Geeignete Verbindungen und typische Konzentrationen werden in EP 1 9 63 415 A beschrieben.

Bei der Extrusion von Folien kann neben der Verwendung einer glatten Chill-Roll auch eine geprägte Chill-Roll oder eine geprägte Anpresswalze verwendet werden, um eine Prägung in der extrudierten Folie zu erzeugen. Auf diese Weise können zusätzliche Informationen von der der Chill-Roll auf die Folie übertragen werden. Die Prägetiefe/-höhe der Chillroll sollte in dem vorliegenden Fall zwischen 0,1 µm und 15 µm, bevorzugt zwischen 1 µm und 5 µm liegen.

In einer weiteren Ausführungsform der Erfindung weist die erfindungsgemäße laserbeschriftbare Folie auf der der Gravierschicht gegenüberliegenden Seite der Kontrastschicht eine Klebmassenschicht, bevorzugt eine Haftklebmassenschicht, auf. Dies ermöglicht eine vereinfachte Konfektionierung der Folie zum Beispiel in Schneid- oder Stanzprozessen in Etiketten, die ebenfalls Gegenstand der vorliegenden Erfindung sind. Weist die erfindungsgemäße laserbeschriftbare Folie eine Klebmassenschicht auf, so können durch einen Stanz- oder Schneidschritt Etiketten erhalten werden, die bereits als solche direkt auf unterschiedliche Substrate aufgebracht werden können, ohne in konfektionierter Form einen weiteren Beschichtungsschritt erfahren zu müssen. Als Haftklebmassen kommen alle typischen Klebmassen in Frage, die eine hohe Klebkraft und eine hohe Anfassklebrigkeit aufweisen, insbesondere Acrylatklebmassen, zum Beispiel harzmodifizierte Acrylatklebmassen, Naturkautschukklebmassen, Silikonklebmassen, durch Hitze aktivierbare Reaktivkleber und Synthesekautschukklebmassen. Geeignete Systeme werden unter anderem in der Patentschrift WO 2007/071547 A1 beschrieben.

Vorzugsweise ist die Klebemasse eine Haftklebemasse, also eine viskoelastische Masse, die bei Raumtemperatur in trockenem Zustand permanent klebrig und klebfähig bleibt. Die Klebung erfolgt durch leichten Anpressdruck sofort auf fast allen Substraten.

Unter einer "Haftklebemasse" wird entsprechend dem allgemeinen Verständnis des Fachmanns ein viskoelastischer Klebstoff verstanden, dessen abgebundener, trockener Film bei Raumtemperatur permanent klebrig ist und klebfähig bleibt sowie durch leichten Anpressdruck auf einer Vielzahl von Substraten verklebt werden kann.

Haftklebemassen sind seit Jahrzehnten bekannt. Als Haftklebemassen werden Klebemassen bezeichnet, die bereits unter relativ schwachem Andruck eine dauerhafte Verbindung mit dem Haftgrund erlauben und nach Gebrauch im Wesentlichen rückstandsfrei vom Haftgrund wieder abgelöst werden können. Haftklebemassen wirken bei Raumtemperatur permanent haftklebrig, weisen also eine hinreichend geringe Viskosität und eine hohe Anfassklebrigkeit auf, so dass sie die Oberfläche des jeweiligen Klebegrunds bereits bei geringem Andruck benetzen. Die Verklebbarkeit der Klebemassen beruht auf ihren adhäsiven Eigenschaften und die Wiederablösbarkeit auf ihren kohäsiven Eigenschaften. Als Basis für Haftklebemassen kommen verschiedene Verbindungen in Frage. Als Hauptgruppen sind Naturkautschuke, synthetische Kautschuke sowie Acrylate zu nennen.

Besonders bevorzugt wird die Folie durch Coextrusion der zwei oder - im Falle der zusätzlichen transparenten Schicht - drei Schichten gebildet. Diese Herstellung ermöglicht eine besonders einfache Herstellung der erfindungsgemäßen Folie mit gleichmäßiger Schichtdicke. Die vorliegende Erfindung betrifft daher auch ein Verfahren zur Herstellung einer erfindungsgemäßen laserbeschriftbaren Folie, bei dem die die Folie bildenden Schichten coextrudiert werden. Vorzugsweise kommt bei dem Verfahren eine geprägte Chill-Roll oder Anpresswalze zum Einsatz. Dadurch wird es möglich, die Kontrast- und/oder die Gravierschicht mit einer Prägung zu versehen. Auf diese Weise können zusätzliche Informationen von der der Chill-Roll auf die Folie übertragen werden. Die Prägetiefe/-höhe der Chillroll sollte in dem vorliegenden Fall zwischen 0,1 µm und 15 µm, bevorzugt zwischen 1 µm und 5 µm liegen. Im Anschluss an die Extrusion kann auf die der Gravierschicht gegenüberliegende Seite der Kontrastschicht eine Klebmasse, vorzugsweise eine Haftklebmasse, aufgetragen werden. Dies kann mit einem Trennpapier oder einem Release-Liner bedeckt werden.

Neben der direkten Coextrusion von farbiger Kontrastschicht und farbiger Gravierschicht basierend auf PMMA oder anderen thermoplastischen Polymeren, kann die farbige Gravierschicht auch über einen Druckprozess aufgetragen werden. Das Aufbringen einer farbigen Gravierschicht auf die spröde Kontrastfolie kann mittels herkömmlicher Druck- und Beschichtungsverfahren erfolgen.

Bei der druckbaren Gravierschicht handelt es sich bevorzugt um eine Lackschicht, die mittels Druckverfahren aufgebracht werden kann. Bevorzugte Beispiele entsprechender Drucklackschichten umfassen Drucklacke auf Basis von elektronenstrahlhärtbaren oder UV-härtbaren Acrylatlacken. In einer alternativen Ausführungsform der Erfindung besteht die Gravierschicht aus einer dünnen Metallschicht. Die Gravierschicht weist bevorzugt eine Dicke von 1 bis 30 µm, bevorzugt 1 bis 20 µm, besonders bevorzugt 1 bis 10 µm auf.

### Ausführungsbeispiele

### Prüfmethoden

Zur Ermittlung der Temperaturbeständigkeit und der Manipulationssicherheit wurden jeweils fünf Etiketten der gemäß den Beispielen 1 bis 9 erhaltenen Muster untersucht. Hierzu wurde wie folgt vorgegangen.

### Temperaturbeständigkeit:

Das Laseretikett wird blasenfrei auf eine 1 mm dicke und flächendeckend mit einem lösungsmittelbasierenden Acrylatlack (Clear Coat) der Firma Kansai Paint (KINO 1210TW-2) lackierte Stahlplatte aufgeklebt. Nach etwa 24 Stunden Wartezeit bei Raumtemperatur wird das Muster für eine Dauer von 2300 h bei 150 °C eingelagert.

Das Muster wird am Ende der Lagerzeit auf Kantenabheben (das Ablösen der Kanten des Etiketts vom Untergrund in mm - gemessen vom Rand des Etiketts) und auf die Anzahl der Risse im Etikett hin untersucht. Außerdem wird der Schrumpf der Muster gemessen (in % von der ursprünglichen Verklebungsfläche).

Die Ergebnisse werden als Mittelwert von fünf Mustern angegeben und auf einer Skala von 1 bis 6 eingeteilt. Dabei bedeutet ein Wert von
1, dass das Kantenabheben weniger als 0,1 mm und der Schrumpf weniger als 0,5 % beträgt; ferner sind keine Risse sichtbar;
2, dass das Kantenabheben weniger als 0,5 mm und der Schrumpf weniger als 2 % beträgt; ferner sind keine Risse sichtbar; Kantenabheben, Schrumpf und/oder Rissbildung sind jedoch so stark ausgeprägt, dass ein Wert von "1" nicht erzielt wurde;
3, dass das Kantenabheben weniger als 2,0 mm und der Schrumpf weniger als 5 % beträgt; ferner sind maximal zwei Risse sichtbar; Kantenabheben, Schrumpf und/oder Rissbildung sind jedoch so stark ausgeprägt, dass ein Wert von "2" nicht erzielt wurde;
4, dass das Kantenabheben weniger als 5,0 mm und der Schrumpf weniger als 10 % beträgt; ferner sind maximal fünf Risse sichtbar; Kantenabheben, Schrumpf und/oder Rissbildung sind jedoch so stark ausgeprägt, dass ein Wert von "3" nicht erzielt wurde;
5, dass sich das Etikett vollständig vom Untergrund ablöst ("vollständiges Kantenabheben") und der Schrumpf 10 % oder mehr beträgt; ferner sind bis zu zehn Risse sichtbar;
6, dass sich das Etikett vollständig vom Untergrund ablöst ("vollständiges Kantenabheben") und der Schrumpf 10 % oder mehr beträgt; ferner sind mehr als zehn Risse sichtbar.

### Manipulationssicherheit:

Bei der Prüfung auf Manipulationssicherheit ("tamper evidence") wird die Brüchigkeit des Musters nach der blasenfreien Verklebung auf einer 1 mm dicken und flächendeckend mit einem Clear Coat der Firma Kansai Paint (KNIO 1210TW-2) lackierten Stahlplatte untersucht. Dazu wird versucht, das Muster nach einer 24 stündigen Wartezeit nach dem blasenfreien Verkleben auf die Stahlplatte vom Untergrund abzuziehen. Die Manipulationssicherheit des Laserlabelmaterials wird in vier Bewertungsstufen ("1" bis "4") eingestuft. Es wird überprüft, mit welchen Hilfsmitteln das Sicherheitsetikett ohne Zerstörung vom Untergrund abgelöst werden kann. Als "Zerstörung" werden in diesem Zusammenhang ein Brechen des Etiketts und eine Rissbildung innerhalb der Kontrastschicht bezeichnet. Dabei bedeutet ein Wert von
1, dass das Etikett auch unter Verwendung von Isopropanol als Lösungsmittel in Kombination mit einer scharfen Metallklinge nicht zerstörungsfrei abgelöst werden kann; in diesem Fall wird die Manipulationssicherheit als gut eingestuft.
2, dass das Etikett auch mit Hilfe einer scharfen Metallklinge als alleinigem zusätzlichem Hilfsmittel nicht zerstörungsfrei abgelöst werden kann; ein zerstörungsfreies Ablösen gelingt allerdings unter Verwendung von Isopropanol als Lösungsmittel in Kombination mit einer scharfen Metallklinge; die Manipulationssicherheit wird als ausreichend eingestuft;
3, dass das Etikett nicht zerstörungsfrei mit der Hand aber mit Hilfe einer scharfen Metallklinge abgelöst werden kann; die Manipulationssicherheit ist insofern ebenfalls ungenügend;
4, dass das Etikett zerstörungsfrei mit der Hand ohne zusätzliches Hilfsmittel abgelöst werden kann; die Manipulationssicherheit ist insofern ungenügend;

### Prozessierbarkeit

Bei der Prüfung auf Prozessierbarkeit bezüglich Kaschier- und Schneidprozess wird die Stabilität der Folien während des Weiterverarbeitungsprozess untersucht.

Zur Beurteilung der Prozessierbarkeit werden mindestens 100 Meter der einzelnen Folienmuster (220 mm Breite) mit einer Transfermasse laminiert. Nach dem Laminieren werden die Folienmuster mittels S-Schnitt in der Mitte halbiert, sodass 2 x 110 mm breite Rollenmuster erhalten werden. Die Prozessierbarkeit der Materialien wird in vier Bewertungsstufen ("1" bis "4") eingestuft. Es wird überprüft ob es bei dem Laminier- und Schneidprozess zu Folienreißern und beim Schneidprozess zusätzlich noch zu Perforation der Schneidkanten kommt.
1, es kommt während des Laminierprozesses zu keinem Folienreißer. Auch das nachträgliche Schneiden verursacht kein Folienreißen und oder eine Perforation der Folienränder;
2, es kommt während des Laminierprozesses zu keinem Folienreißer. Durch das nachträgliche Schneiden kommt es zu einer Perforation der Folienränder;
3, es kommt während des Laminierprozesses zu einem Folienreißer. Der nachträgliche Rollenschnitt verursacht einen Folienreißer und eine Perforation der Folienränder;
4, es kommt während des Laminierprozesses zu mehreren Folienreißern. Das nachträgliche Schneiden verursacht mehrere Folienreißer und eine Perforation der Folienränder.

### Identifizierung der Taggants

Zur Identifizierung der Taggants wird ein Emissionsspektrum mittels eines Handgerätes aufgenommen. In dem Handgerät ist eine sowohl die Emissionsquelle (LED UV-Strahler 250 bis 550 nm) als auch das Spektrometer enthalten. Das aufgenommene Spektrum der Emission wird mit dem entsprechenden gespeicherten Datensatz auf dem Handlesegerät abgeglichen. Bei Übereinstimmung wird die Identität des entsprechenden Taggants angezeigt.

Die Identifizierbarkeit der Probe wird in drei Bewertungsstufen ("1" bis "3") eingeteilt
1, die Probe wird beim ersten Identifikationsversuch richtig erkannt;
2, es sind zwischen zwei und fünf Versuche nötig bis die Probe identifiziert wird;
3, die Probe wird nach mindestens 5 Versuchen nicht identifiziert.

### Herstellung Masterbatch aus PMMA und Taggant

Eine Mischung aus 90 Teilen PMMA-Formmasse und 10 Teilen anorganischen Taggant (Tailor-Safe^{®}) der Firma Tailorlux wurde mittels Doppelschneckenextruder (Coperion ZSK 26) zu einem Masterbatch verarbeitet. Die Extrusionstemperaturen betrugen für die Einzugszone 90 °C, die Plastifizierungszone 150 °C, die Scherzone 250 °C. Der extrudierte heiße Masterbatchstrang wurde in einem Wasserbad auf nahezu Raumtemperatur abgekühlt und mit Hilfe eines Granulators in eine Granulat zerkleinert.

### Bedrucken einer spröden PMMA Kontrastfolie

Zur Herstellung von Mustern laserbeschiftbarer bedruckter Folien wurde in den folgenden Beispielen 8 und 9 eine 50 µm dicke farbige PMMA-Folie an einem UV-Flexodruckwerk der Firma SMB bei einer Bahngeschwindigkeit von 15 m/min mit Flexocure Gemini (schwarz) der Firma Flint zur Herstellung einer Gravierschicht bedruckt, so dass die Druckhöhe zwischen 2 und 5 µm betrug. Anschließend wurde die so erhaltene Beschichtung zur Herstellung der Gravierschicht unter Verwendung einer Hg-Strahlerröhre des Typs E 70-2 (4)x1 BLK-2-SLC der Firma IST Metz GmbH UV-gehärtet. Die Strahlerleistung der Strahlerröhre betrug 80 W/cm.

### Lamination einer Klebemasse

Die extrudierte mehrschichtige PMMA-Folie, bestehend aus Gravierschicht/Kontrastschicht, wurde auf eine einseitig mit einem Releaseliner ausgestattete, 40 µm dicke Acrylathaftklebmasse aufgebracht. Als Haftklebmasse wurde eine harzmodifizierte Acrylatklebmasse verwendet, die zu 80 Gew.-% aus einem Acrylatcopolymer und zu 20 Gew.-% aus Terpenphenolharz bestand. Das Copolymer wurde durch Polymerisation von 47,5 Gew.-% n-Butylacrylat, 47,5 Gew.-%, 2-Ethylhexylacrylat, 2 Gew.-% Glycidylmethacrylat und 1 Gew.-% Acrylsäure erhalten.

### Lasern

Die so erhaltene Folie wurde mittels Laserverfahren unter Verwendung eines Nd:YAG Festkörperlasers 50D der Firma Rofin mit einem Testschriftzug und einem Barcode beschriftet und ebenfalls unter Verwendung dieses Lasers in 3 x 8 cm große Etiketten geschnitten.

### Allgemeine Beschreibung der Extrusionsparameter

Zur Herstellung der zweischichtigen farbigen Folien wurde ein Extrusions-Chill-Roll-Prozess verwendet. Die hierzu eingesetzte Extrusionsanlage bestand aus zwei (optional drei) Einschneckenextrudern und einer Mehrschichtdüse (Breitschlitzextrusionsdüse mit zwei, optional drei Verteilerkanälen). Der Gesamtaufbau aus Chill-Roll und zusätzlichem Walzwerk wies eine L-Konfiguration auf. Des Weiteren war in einem Winkel von 90° zur Polymerschmelze und in einem Winkel von 180° zur Chill-Roll eine gummierte Anpresswalze installiert, mit der optional die Polymerschmelze an die Chill-Roll gedrückt werden konnte. Im ersten Einschneckenextruder A zur Herstellung der dickeren Kontrastschicht wurden die mit weißem Masterbatch abgemischte PMMA-Formmassen eingesetzt. Im zweiten Einschneckenextruder B zur Herstellung der äußeren dünneren Gravierschicht wurden die mit schwarzem Masterbatch abgemischten Formmasse eingesetzt. Die Extrusionstemperaturen für die nicht schlagzähmodifizierten PMMA-Formmassen betrug für die Einzugszone 90 °C, die Plastifizierungszone 150 °C, die Scherzone 250 °C und für die Düse ebenfalls 250 °C. Für die schlagzähmodifizierten PMMA-Resist^{®}-Formmassen betrugen die Temperaturen für die Einzugszone 90 °C, die Plastifizierungszone 150 °C, die Scherzone 250 °C und für die Düse 230 °C. Im Abstand von ca. 20 mm zur Austrittsöffnung der Mehrschichtdüse wurde die Chill-Roll-Walze mittig positioniert. Die Temperatur der Chill-Roll Walze wurde zwischen 70 °C und 130 °C eingestellt, bevorzugt von 90 °C bis 100 °C. Die Temperatur des Schmelzestroms betrug bei Austritt aus der Düse ca. 250 °C beziehungsweise 230 °C. Die innere Schicht des Polymerschmelzefilms legte sich annähernd tangential an die Chill-Roll und umschlang diese um ca. 90°. Nach Umschlingung der weiteren Nachkühlwalzen wurde die Folie aufgewickelt. Das Dickenverhältnis der dickeren Kontrastschicht zur dünneren Gravierschicht wurde immer 4 zu 1 gewählt. Die Gesamtdicke der Beispiele 1, 3 und 4 betrug 125 µm, die des Beispiels 2 75 µm. Es wurde mit einer Geschwindigkeit von 4 m/min. extrudiert.

### Vergleichsbeispiel 1 (spröde/spröde) -

100 µm/25 µm

| Kontrastschicht | | |
|---|---|---|
| **83** Teile | PMMA H7 | Spröde PMMA Formmasse der Firma Evonik |
| **15** Teile | Renol Weiss, PMMA H7 | TiO₂ Farbmasterbatch der Firma Clariant |

| Gravierschicht | | |
|---|---|---|
| **90** Teile | PMMA H7 | Spröde PMMA Formmasse der Firma Evonik |
| **10** Teile | Renol Schwarz, PMMA H7 | Carbon Black Farbmasterbatch der Firma Clariant |

### Vergleichsbeispiel 2

### (spröde/spröde) -

60 µm/15 µm dünnere Variante die leichter bricht

| Kontrastschicht | | |
|---|---|---|
| **80** Teile | PMMA H7 | Spröde PMMA Formmasse der Firma Evonik |
| **20** Teile | Renol Weiss, PMMA H7 | TiO₂ Farbmasterbatch der Firma Clariant |

| Gravierschicht | | |
|---|---|---|
| **85** Teile | PMMA H7 | Spröde PMMA Formmasse der Firma Evonik |
| **15** Teile | Renol Schwarz, PMMA H7 | Carbon Black Farbmasterbatch der Firma Clariant |

### Beispiel 3

### (spröde/impact modified) -

100 µm/25 µm

| Kontrastschicht | | |
|---|---|---|
| **85** Teile | PMMA H7 | Spröde PMMA Formmasse der Firma Evonik |
| **15** Teile | Renol Weiss, PMMA H7 | TiO₂ Farbmasterbatch der Firma Clariant |

| Gravierschicht | | |
|---|---|---|
| **90** Teile | PMMA Resist^{®} 100 | Impact modified PMMA Formmasse der Firma Evonik |
| **10** Teile | Renol Schwarz, PMMA Resist 100 | Carbon Black Farbmasterbatch der Firma Clariant |

### Beispiel 4

### (impact modified /spröde) -

Vergleichsbeispiel (weil zerstörungsfrei ablösbar) 100 µm/25 µm

| Kontrastschicht | | |
|---|---|---|
| **85** Teile | PMMA Resist^{®}100 | Impact modified PMMA Formmasse der Firma Evonik |
| **15** Teile | Renol Weiss, PMMA Resist 100 | TiO₂ Farbmasterbatch der Firma Clariant |

| Gravierschicht | | |
|---|---|---|
| **90** Teile | PMMA H7 | Spröde PMMA Formmasse der Firma Evonik |
| **10** Teile | Renol Schwarz, PMMA H7 | Carbon Black Farbmasterbatch der Firma Clariant |

### Vergleichsbeispiel 5

### (spröde/spröde/spröde) -

60 µm/15 µm/15 µm dünnere Variante die leichter bricht + Taggant

| | | |
|---|---|---|
| | | |
| **80** Teile | PMMA H7 | Spröde PMMA Formmasse der Firma Evonik |
| **20** Teile | Renol Weiss, PMMA H7 | TiO₂ Farbmasterbatch der Firma Clariant |

| Gravierschicht | | |
|---|---|---|
| **85** Teile | PMMA H7 | Spröde PMMA Formmasse der Firma Evonik |
| **15** Teile | Renol Schwarz, PMMA H7 | Carbon Black Farbmasterbatch der Firma Clariant |

| Taggant markierte Schicht | | |
|---|---|---|
| **99** Teile | PMMA H7 | Spröde PMMA Formmasse der Firma Evonik |
| 1 Teile | PMMA H7 | Taggantmasterbatch aus Spröde PMMA Formmasse der Firma Evonik und Taggant der Firma Tailorlux |

### Vergleichsbeispiel 6

### (spröde/spröde/spröde) -

Vergleichsbeispiel 60 µm/15 µm/15 µm dünnere Variante, die leichter bricht + Taggant in der schwarzen Schicht (keine Detektion)

| Kontrastschicht | | |
|---|---|---|
| **80** Teile | PMMA H7 | Spröde PMMA Formmasse der Firma Evonik |
| **20** Teile | Renol Weiss, PMMA H7 | TiO₂ Farbmasterbatch der Firma Clariant |

| Gravierschicht | | |
|---|---|---|
| **84** Teile | PMMA H7 | Spröde PMMA Formmasse der Firma Evonik |
| **15** Teile | Renol Schwarz, PMMA H7 | Carbon Black Farbmasterbatch der Firma Clariant |
| **1** Teile | PMMA H7 | Taggantmasterbatch aus Spröde PMMA Formmasse der Firma Evonik und Taggant der Firma Tailorlux |

| Transparente Außenschicht | | |
|---|---|---|
| **99** Teile | PMMA H7 | Spröde PMMA Formmasse der Firma Evonik |

### Vergleichsbeispiel 7

### (impact modified / impact modified) -

Vergleichsbeispiel (weil zerstörungsfrei ablösbar) 100 µm/25 µm

| Kontrastschicht | | |
|---|---|---|
| **85** Teile | PMMA Resist^{®}100 | Impact modified PMMA Formmasse der Firma Evonik |
| **15** Teile | Renol Weiss, PMMA Resist 100 | TiO₂ Farbmasterbatch der Firma Clariant |
| | | |

| Gravierschicht | | |
|---|---|---|
| **90** Teile | PMMA Resist^{®}100 | Spröde PMMA Formmasse der Firma Evonik |
| **10** Teile | Renol Schwarz, PMMA Resist^{®}100 | Carbon Black Farbmasterbatch der Firma Clariant |

### Vergleichsbeispiel 8

### (spröde weiße Folie /schwarz mit Laser Label Lack bedruckt) -

50 µm/5 µm

| Kontrastschicht | | |
|---|---|---|
| **80** Teile | PMMA H7 | Spröde PMMA Formmasse der Firma Evonik |
| **20** Teile | Renol Weiss, PMMA H7 | TiO₂ Farbmasterbatch der Firma Clariant |

| Gravierschicht | |
|---|---|
| 5 µm | Flexocure Gemini (schwarz) |

### Vergleichsbeispiel 9

### (impact modified weiße Folie / schwarz mit Laser Label Lack bedruckt) -

50 µm/4 µm Vergleichsbeispiel (weil zerstörungsfrei ablösbar)

| Kontrastschicht | | |
|---|---|---|
| **85** Teile | PMMA Resist^{®}100 | Impact modified PMMA Formmasse der Firma Evonik |
| **15** Teile | Renol Weiss, PMMA Resist 100 | TiO₂ Farbmasterbatch der Firma Clariant |

| Gravierschicht | |
|---|---|
| 5 µm | Flexocure Gemini (schwarz) |

### Ergebnisse

| | Vergleichsbeispiel 1 | Vergleichsbeispiel 2 | Beispiel 3 | Beispiel 4 | Vergleichsbeispiel 5 | Vergleichsbeispiel 6 | Vergleichsbeispiel 7 |
|---|---|---|---|---|---|---|---|
| Temperaturbeständigkeit | 2 | 2 | 1 | 1 | 1 | 1 | 2 |
| Manipulationssicherheit | 2 | 1 | 3 | 3 | 1 | 1 | 4 |
| Prozessierbarkeit | 1 | 1 | 1 | 1 | 1 | 1 | 1 |
| Detektierbarkeit Taggants | - | - | - | - | 1 | 3 | - |

| | Vergleichsbeispiel 8 | Vergleichsbeispiel 9 |
|---|---|---|
| Temperaturbeständigkeit | 2 | 2 |
| Manipulationssicherheit | 1 | 4 |
| Prozessierbarkeit | 1 | 1 |
| Detektierbarkeit Taggants | - | - |

## Patentansprüche

1. **Laserbeschriftbare** Folie, ausgebildet und angepasst zur Beschriftbarkeit mittels eines Lasers, umfassend
- eine Kontrastschicht auf Basis einer Polymethacrylatverbindung, die vorzugsweise extrudiert ist,
- eine auf der Kontrastschicht angeordnete vorzugsweise extrudierte Gravierschicht auf Basis einer vorzugsweise extrudierten Polymethacrylatverbindung,
wobei die Polymethacrylatverbindungen auf einer Zusammensetzung umfassend
∘ 60 bis 98 Gew.-% zumindest eines Polymethacrylates
∘ sowie 2 bis 40 Gew.-% eines farbgebenden Pigments
basieren und wobei Kontrastschicht und Gravierschicht voneinander verschiedene farbgebende Pigmente aufweisen,
**dadurch gekennzeichnet, dass**
das zumindest eine Polymethacrylat von zumindest einer der beiden Schichten frei von Schlagzähmodifikatoren ist und die andere der beiden Schichten ein schlagzähmodifiziertes Polymethacrylat enthält.

2. Laserbeschriftbare Folie nach Anspruch 1,
**dadurch gekennzeichnet, dass**
das zumindest eine Polymethacrylat ein Polymethylmethacrylat ist.

3. Laserbeschriftbare Folie gemäß einem der Ansprüche 1 oder 2,
**dadurch gekennzeichnet, dass**
die Kontrastschicht TiO₂ als farbgebendes Pigment und die Gravierschicht carbon black als farbgebendes Pigment enthält.

4. Laserbeschriftbare Folie nach Anspruch 3,
**dadurch gekennzeichnet, dass**
die Kontrastschicht mindestens 5 Gew.-%, vorzugsweise mindestens 10 Gew.-% TiO₂ enthält.

5. Laserbeschriftbare Folie nach Anspruch 3 oder 4,
**dadurch gekennzeichnet, dass**
die Gravierschicht mindestens 5 Gew.-%, vorzugsweise mindestens 7,5 Gew.-% carbon black enthält.

6. Laserbeschriftbare Folie gemäß zumindest einem der vorhergehenden Ansprüche,
**dadurch gekennzeichnet, dass**
sie des Weiteren eine auf der Gravierschicht angeordnete extrudierte transparente dritte Schicht aufweist.

7. Laserbeschriftbare Folie gemäß Anspruch 6,
dadurch gegenzeichnet, dass
die transparente dritte Schicht aus einem Poly(meth)acrylat besteht.

8. Laserbeschriftbare Folie gemäß Anspruch 6 oder 7,
**dadurch gekennzeichnet, dass**
die transparente dritte Schicht ein Pigment enthält, welches Strahlung im nicht sichtbaren Bereich absorbiert.

9. Laserbeschriftbare Folie gemäß Anspruch 8, **dadurch gekennzeichnet, dass** die Konzentration des Pigmentes, das Strahlung im nicht sichtbaren Bereich absorbiert, höchstens 10 Gew.-%, bevorzugt höchstens 1 Gew.-% und besonders bevorzugt höchstes 0,1 Gew.-% beträgt.

10. Laserbeschriftbare Folie gemäß zumindest einem der vorhergehenden Ansprüche,
**dadurch gekennzeichnet, dass**
die Folie eine Schichtdicke von 40 µm bis 200 µm aufweist.

11. Laserbeschriftbare Folie gemäß zumindest einem der vorhergehenden Ansprüche,
**dadurch gekennzeichnet, dass**
auf der der Gravierschicht gegenüberliegenden Seite der Kontrastschicht eine Klebmassenschicht, insbesondere eine Haftklebemassenschicht, angeordnet ist.

12. Laserbeschriftbare Folie gemäß zumindest einem der vorhergehenden Ansprüche,
**dadurch gekennzeichnet, dass**
die Schichten durch Coextrusion gebildet sind.

13. Laserbeschriftbares Etikett, hergestellt aus einem Abschnitt der laserbeschriftbaren Folie gemäß zumindest einem der vorhergehenden Ansprüche.

14. Verfahren zur Herstellung einer laserbeschriftbaren Folie nach zumindest einem der Ansprüche 1 bis 12,
**dadurch gekennzeichnet, dass**
die die Folie bildenden Schichten coextrudiert werden.

15. Verwendung der laserbeschriftbaren Folie nach einem der Ansprüche 1 bis 12 oder des laserbeschriftbaren Etikettes nach Anspruch 13 zur Kennzeichnung von Fahrzeugen oder Fahrzeugteilen.

## Claims

1. Laser-writable film, configured and adapted for writability by means of a laser, comprising
- a contrast layer based on a polymethacrylate compound, preferably extruded,
- an engraving layer, preferably extruded, disposed on the contrast layer and based on a preferably extruded polymethacrylate compound,
wherein the polymethacrylate compounds are based on a composition comprising
∘ 60% to 98% by weight of at least one polymethacrylate
∘ and 2% to 40% by weight of a colouring pigment
and wherein contrast layer and engraving layer have different colouring pigments from each other,
**characterized in that**
the at least one polymethacrylate of at least one of the two layers is free of impact modifiers and the other of the two layers contains an impact-modified polymethacrylate.

2. Laser-writable film according to Claim 1,
**characterized in that**
the at least one polymethacrylate is a polymethyl methacrylate.

3. Laser-writable film according to one of Claims 1 or 2,
**characterized in that**
the contrast layer contains TiO₂ as colouring pigment and the engraving layer contains carbon black as colouring pigment.

4. Laser-writable film according to Claim 3,
**characterized in that**
the contrast layer contains at least 5% by weight, preferably at least 10% by weight, of TiO₂.

5. Laser-writable film according to Claim 3 or 4,
**characterized in that**
the engraving layer contains at least 5% by weight, preferably at least 7.5% by weight, of carbon black.

6. Laser-writable film according to at least one of the preceding claims,
**characterized in that**
it additionally has an extruded transparent third layer disposed on the engraving layer.

7. Laser-writable film according to Claim 6,
**characterized in that**
the transparent third layer consists of a poly(meth)acrylate.

8. Laser-writable film according to Claim 6 or 7,
**characterized in that**
the transparent third layer contains a pigment that absorbs radiation in the non-visible range.

9. Laser-writable film according to Claim 8, **characterized in that** the concentration of the pigment that absorbs radiation in the non-visible range is at most 10% by weight, preferably at most 1% by weight and more preferably at most 0.1% by weight.

10. Laser-writable film according to at least one of the preceding claims,
**characterized in that**
the film has a layer thickness of 40 µm to 200 µm.

11. Laser-writable film according to at least one of the preceding claims,
**characterized in that**
on the opposite side of the contrast layer from the engraving layer, a layer of adhesive, more particularly a layer of pressure-sensitive adhesive, is disposed.

12. Laser-writable film according to at least one of the preceding claims,
**characterized in that**
the layers are formed by coextrusion.

13. Laser-writable label, produced from a portion of the laser-writable film according to at least one of the preceding claims.

14. Method for producing a laser-writable film according to at least one of Claims 1 to 12,
**characterized in that**
the layers forming the film are coextruded.

15. Use of the laser-writable film according to any of Claims 1 to 12 or of the laser-writable label according to Claim 13 for marking vehicles or vehicle parts.

## Revendications

1. Film marquable au laser, conçu et adapté pour être marquable au moyen d'un laser, comprenant
- une couche de contraste à base d'un composé polyméthacrylate, de préférence extrudé,
- une couche de gravure, de préférence extrudée, disposée sur la couche de contraste, à base d'un composé polyméthacrylate, de préférence extrudé,
les composés polyméthacrylates étant basés sur une composition comprenant
o de 60 à 98% en poids d'au moins un polyméthacrylate
o et de 2 à 40% en poids d'un pigment colorant
et la couche de contraste et la couche de gravure présentant des pigments colorants différents l'un de l'autre,
**caractérisé en ce que**
ledit au moins un polyméthacrylate d'au moins une des deux couches est exempt de modificateurs d'impact et l'autre des deux couches contient un polyméthacrylate à modificateurs d'impact.

2. Film marquable au laser selon la revendication 1,
**caractérisé en ce que**
ledit au moins un polyméthacrylate est un polyméthacrylate de méthyle.

3. Film marquable au laser selon l'une des revendications 1 ou 2,
**caractérisé en ce que**
la couche de contraste contient du TiO₂ comme pigment colorant et la couche de gravure du noir de carbone comme pigment colorant.

4. Film marquable au laser selon la revendication 3,
**caractérisé en ce que**
la couche de contraste contient au moins 5% en poids, de préférence au moins 10% en poids, de TiO₂.

5. Film marquable au laser selon la revendication 3 ou la revendication 4,
**caractérisé en ce que**
la couche de gravure contient au moins 5% en poids, de préférence au moins 7,5% en poids, de noir de carbone.

6. Film marquable au laser selon au moins une des revendications précédentes,
**caractérisé**
**en ce qu'**il présente en outre une troisième couche transparente extrudée disposée sur la couche de gravure.

7. Film marquable au laser selon la revendication 6,
**caractérisé en ce que**
la troisième couche transparente est constituée d'un poly(méth)acrylate.

8. Film marquable au laser selon la revendication 6 ou la revendication 7,
**caractérisé en ce que**
la troisième couche transparente contient un pigment qui absorbe le rayonnement dans le domaine non visible.

9. Film marquable au laser selon la revendication 8, **caractérisé en ce que** la concentration du pigment qui absorbe le rayonnement dans le domaine non visible est d'au plus 10% en poids, de préférence d'au plus 1% en poids, et de manière particulièrement préférée d'au plus 0,1% en poids.

10. Film marquable au laser selon au moins une des revendications précédentes,
**caractérisé en ce que**
le film présente une épaisseur de couche allant de 40µm à 200µm.

11. Film marquable au laser selon au moins une des revendications précédentes,
**caractérisé en ce que**
une couche de masse adhésive, en particulier une couche de masse autoadhésive, est disposée sur le côté de la couche de contraste opposé à la couche de gravure.

12. Film marquable au laser selon au moins une des revendications précédentes,
**caractérisé en ce que**
les couches sont formées par coextrusion.

13. Étiquette marquable au laser, fabriquée à partir d'une portion du film marquable au laser selon au moins l'une des revendications précédentes.

14. Procédé de fabrication d'un film marquable au laser selon au moins l'une des revendications 1 à 12,
**caractérisé en ce que**
les couches formant le film sont coextrudées.

15. Utilisation du film marquable au laser selon l'une des revendications 1 à 12 ou de l'étiquette marquable au laser selon la revendication 13 pour le marquage de véhicules ou de pièces de véhicules.
